# EUROPÄISCHE PATENTANMELDUNG

(11) **EP 3 208 913 A1**
(43) Veröffentlichungstag der Anmeldung: **23.08.2017**
(21) Anmeldenummer: 16156724.3
(22) Anmeldetag: 22.02.2016
(51) Int. Cl.: H02K 1/27, H02K 1/30, H02K 1/32, H02K 9/06

(54) **LÄUFER EINER PERMANENTERREGTEN DYNAMOELEKTRISCHEN ROTATORISCHEN MASCHINE UND DEREN VERWENDUNG**

(71) Anmelder: Siemens Aktiengesellschaft, 80333 München (DE)
(72) Erfinder: Pfannschmidt, Bernd, 90574 Rosstal (DE); Stärz, Tobias, 91257 Pegnitz (DE); Wetzel, Wolfgang, 91074 Herzogenaurach (DE)

(57) **Zusammenfassung**

Die Erfindung betrifft einen Läufer (4) einer permanenterregten dynamoelektrischen rotatorischen Maschine (1) mit einer topfartigen, zumindest eine zylinderförmige Wandung aufweisende Trageinheit (5), wobei am Außenumfang der Wandung dieser Trageinheit (5) Permanentmagnete (8) angeordnet sind und in der Wandung im wesentlichen axial verlaufende Kühlkanäle (7) vorgesehen sind.

## Beschreibung

Die Erfindung betrifft einen Läufer einer permanenterregten dynamoelektrischen rotatorischen Maschine, eine dynamoelektrische rotatorischen Maschine als auch eine Verwendung einer derartigen Maschine.

Bei permanenterregten dynamoelektrischen Maschinen, weist das Magnetmaterial der Permanentmagnete je nach Legierungszusammensetzung eine maximal zulässige Obergrenze der Einsatztemperatur auf. Wenn diese überschritten wird, tritt eine irreversible Entmagnetisierung des Magnetmaterials auf, welche den Läufer zerstören kann oder aber zumindest das Betriebsverhalten der dynamoelektrischen Maschine entscheidend beeinträchtigt. Einer unzulässigen Erwärmung der Permanentmagnete des Läufers im Betrieb einer dynamoelektrischen Maschine durch Wirbelstromverluste und Wärmeeintrag über den Luftspalt vom Stator kann durch eine gezielte Luftkühlung des Rotors verhindert werden.

Bisher sind derartige rotatorische dynamoelektrische Maschinen mit Radial- oder Axiallüftern versehen, die einen Luftaustausch innerhalb der dynamoelektrischen Maschine, insbesondere über den Luftspalt bewirken und so eine Kühlung der Permanentmagnete herbeiführen. Die Kühlung der Permanentmagnete über den Luftspalt der dynamoelektrischen rotatorischen Maschine ist aber in vielen Fällen ungenügend.

Ausgehend davon liegt der Erfindung die Aufgabe zugrunde, einen Läufer einer dynamoelektrischen rotatorischen Maschine zu schaffen, der eine effiziente Kühlung seiner Permanentmagnete gestattet, ein vergleichsweise geringes Trägheitsmoment aufweist und günstig herstellbar ist, um damit einen leistungsfähigen elektrischen Antrieb für unterschiedlichste Anwendungen bereitstellen zu können.

Die Lösung der gestellten Aufgabe gelingt durch einen Läufer einer permanenterregten dynamoelektrischen rotatorischen Maschine mit einer topfartigen, zumindest eine zylinderförmige Wandung aufweisende Trageinheit, wobei am Außenumfang der Wandung dieser Trageinheit Permanentmagnete angeordnet sind und in der Wandung im wesentlichen axial verlaufende Kühlkanäle vorgesehen sind.

Die Lösung der gestellten Aufgabe gelingt ebenfalls durch eine dynamoelektrische Maschine mit einem Läufer nach einem der vorhergehenden Ansprüche, wobei ein stationär angeordnetes Vorleitrad dem Läufer vorgeschaltet ist.

Ebenso gelingt die Lösung der gestellten Aufgabe durch eine Werkzeugmaschine, ein Elektroauto, einen Traktionsantrieb oder ein elektrisch angetriebenes Flugzeug, mit zumindest einer dynamoelektrischen Maschine.

Das erfindungsgemäße Kühlkonzept des Läufers, wird nunmehr über eine Vielzahl von axial angeordneten Kühlluftkanälen an einer Trageinheit realisiert. Durch die räumliche Nähe der mit Kühlluft durchströmtem Kanäle zu den Permanentmagneten wird eine ausreichende Kühlung der Permanentmagnete gewährleistet. Durch die vergleichsweise große Oberfläche der Kühlkanäle, insbesondere durch deren Anzahl oder zusätzliche axial verlaufende Rippen in den Kühlkanälen werden nunmehr die Verluste der Permanentmagnete des Läufers über die Trageinheit konvektiv an die geförderte Luft übertragen und abgeführt.

Diese Verluste in den Permanentmagneten entstehen unter anderem durch Wirbelströme.

Dabei sind die Kühlkanäle in Umfangsrichtung betrachtet geschlossen oder offen ausgeführt. Durch die offene Ausführung der Kühlkanäle ergeben sich in Richtung Permanentmagnete axial verlaufende Schlitze, die dort einen unmittelbaren Kontakt eines Kühlluftstroms zumindest zu einem Teil eines jeweiligen Permanentmagnetes herstellen.

Besonders vorteilhaft ist es, wenn die Trageinheit dabei aus einem gut wärmeleitfähigen Material, wie z.B. aus Aluminium ausgeführt ist.

Um das Gewicht und damit auch die Trägheit des Läufers zu reduzieren, ist dieser neben einem vergleichsweise leichten Material, mit einer speichenförmigen Tragstruktur versehen, die mit der Welle drehfest verbunden ist. Diese Tragstruktur ist deshalb vorzugsweise nur an einem Ende der Tragstruktur vorgesehen.

Um die Kühlluft abzuführen und den Wickelkopf auf zumindest einer Seite des Stators zu kühlen sind an einem axialen Endbereich der Trageinheit schräg nach außen führende Abschnitte dieser Kühlkanäle vorgesehen sind, die sich in einer Auskragung der Trageinheit befinden. Diese Auskragung setzt, axial betrachtet, an einem Ende der zylinderförmig ausgestalteten Wandung der Trageinheit an. Des Weiteren wird auch aufgrund der abknickenden Kühlkanäle schräg nach außen führende Abschnitte der Kühlkanäle eine Radiallüfterwirkung herbeigeführt, die unter anderem damit auch der Kühlung des Wickelkopfes zumindest auf einer Seite der Maschine dienen kann.

Der erfindungsgemäße Läufer vereinigt somit die Funktionen der Drehmomentübertragung, Kühlluftförderung als auch der Wärmeabfuhr aus den auf ihm angeordneten Permanentmagneten.

Der Läufer weist somit in axialer als auch in radialer Richtung eine sehr kompakte Bauweise auf und kann vergleichsweise einfach als herkömmliches Dreh- bzw. Frästeil aus einem nicht-magnetisch aber vergleichsweise gut wärmeleitenden Material, beispielsweise Aluminium kostengünstig gefertigt werden. Dies gelingt insbesondere dadurch, dass erfindungsgemäß bei derartigen Ausführungen der Trageinheit und damit des Läufers bei der Herstellung keine Hinterschnitte auftreten und die Bearbeitungsebenen in radial angeordneten Ebenen liegen.

Um das Gewicht und damit auch die Trägheit des Läufers weiter zu reduzieren, wird der Läufer als einseitig offene Rotorglocke bzw. die Trageinheit als topfähnliches Gebilde ausgeführt.

Strömungstechnisch besonders vorteilhaft ist es, wenn eine Vorzugsdrehrichtung der rotatorischen Maschine besteht und dann im Ansaugbereich des Läufers ein stationäres Leitrad angeordnet ist, das Luft während des vor allem axialen Anströmens in Richtung Läufer einen vorgegebenen Vorwärtsdrall versetzt. Damit werden die Eintrittsverluste in die Kühlkanäle der Trageinheit des Läufers aufgrund von Strömungsablösungen verringert.

Die auf der Trageinheit angeordneten magnetischen Pole werden entweder durch klassische Magnete gebildet, d.h. Nord- oder Südpol weisen zum Luftspalt oder durch Magnete, bei denen die Flussführung im Läufer durch die Magnete selbst erfolgt, wie z.B. bei lateral magnetisierten Magnete oder Magnete in Halbach-Anordnung. Vor allem bei klassischen Magneten ist zusätzlich zwischen Trageinheit und Magnet eine flussführende Schicht anzuordnen.

Eine Kombination aus einem bisher bekannten Läufer bzw. Magnetträger mit axialen Kühlkanälen sowie einem strömungsoptimierten wellenfestverbundenen Lüfter (radial/axial, saugend/ drückend) als separates Bauteil z.B. mit Rapid-Prototyping-Technologien hergestellt, stellt eine alternative Lösung des erfinderischen Gedankens dar.

Die Erfindung sowie weitere vorteilhafte Ausgestaltungen der Erfindung sind den schematisch dargestellten Ausführungsbeispielen zu entnehmen. Dabei zeigen:
- FIG 1: einen Längsschnitt einer derartigen Maschine,
- FIG 2: eine perspektivische Darstellung einer Trageinheit,
- FIG 3: einen partiellen Längsschnitt eines Läufers,
- FIG 4: einen partiellen Längsschnitt des Läufers mit einem Vorleitrad,
- FIG 5: eine Detailansicht der Oberfläche des Läufers,
- FIG 6 und 7: partielle Längsschnitte von Läufern mit unterschiedlichen Auskragungen,
- FIG 8 bis 10: partielle Querschnitte von Läufern.

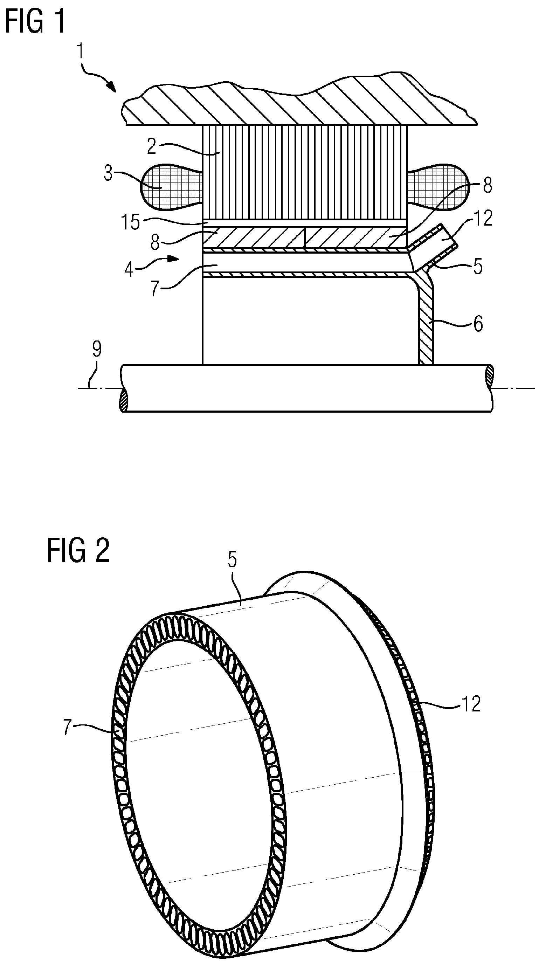

FIG 1 zeigt einen Längsschnitt eines Motors, der als Antrieb, z.B. eines Schienenfahrzeugs, eines Flugzeugs (e-aircraft) oder einer Werkzeugmaschine einsetzbar ist, wobei der Antrieb eine dynamoelektrische rotatorische Maschine 1 mit einem permanentmagneterregten Läufer 4 aufweist. Die dynamoelektrische Maschine 1 weist dabei einen Stator 2 auf, wobei in nicht näher dargestellten axial verlaufenden Nuten des Blechpakets des Stators 2 ein Wicklungssystem vorgesehen ist, das an den Stirnseiten des Stators 2 Wickelköpfe 3 ausbildet.

Von einem Luftspalt 15 des Stators 2 der dynamoelektrischen Maschine 1 beabstandet, ist ein Läufer 4 angeordnet, der auf einer Oberfläche einer Trageinheit 5 des Läufers 4 Permanentmagnete 8 aufweist. Am Außenumfang der topfartig ausgeführten Trageinheit 5, der zumindest abschnittsweise zylindrisch geformt ist und dem Luftspalt 15 zugewandt ist, befinden sich demnach die Permanentmagnete 8. Die Trageinheit 5 ist über eine Tragstruktur 6 mit einer Welle verbunden, die um eine Achse 9 drehbar gelagert ist.

Die Tragstruktur 6 bildet einen Teil der Trageinheit 5. Bei einstückiger Ausbildung der Trageinheit 5 beinhaltet diese zumindest die Tragstruktur 6, die Kühlkanäle 7 und die Auskragung 16.

Radial unterhalb der Permanentmagnete 8 sind im Wesentlichen axial verlaufende Kanäle 7 vorgesehen, die an zumindest einem Ende eine Krümmung bzw. Auskragung 16 jeweils einen Auslass 12 aufweisen und so bei Rotation des Läufers 4 eine Radiallüfterwirkung erzeugen, die zumindest einen Wickelkopf 3 des Stators 2 zusätzlich kühlt oder zumindest für eine Luftverwirbelung in diesem Bereich sorgt.

Pro magnetischem Pol sind dabei grundsätzlich in axialer und/oder in Umfangsrichtung betrachtet wenigstens ein Permanentmagnet 8 vorgesehen. Es sind auch Staffelungen oder Schrägungen der magnetischen Pole über die axiale Länge des Läufers betrachtet vorgesehen, sofern diese für einen Betrieb der dynamoelektrischen rotatorischen Maschine ohne Rastmomente notwendig ist.

FIG 2 zeigt in einer perspektivischen Darstellung eine einstückig ausgeführte Trageinheit 5, in der die axial verlaufenden Kühlkanäle 7 und die Auskragung 16 mit ihren Auslässen 12 an einem axialen Ende der Trageinheit 5 zu sehen sind.

Die Trageinheit 5 weist somit in axialer als auch in radialer Richtung eine sehr kompakte Bauweise auf und kann vergleichsweise einfach als herkömmliches Dreh- bzw. Frästeil aus einem nicht-magnetisch aber vergleichsweise gut wärmeleitenden Material, beispielsweise Aluminium kostengünstig gefertigt werden. Dies gelingt insbesondere dadurch, dass bei einer derartigen Ausführung der Trageinheit 5 und damit des Läufers 4 bei der Herstellung keine Hinterschnitte auftreten und die Bearbeitungsebenen in radial angeordneten Ebenen liegen.

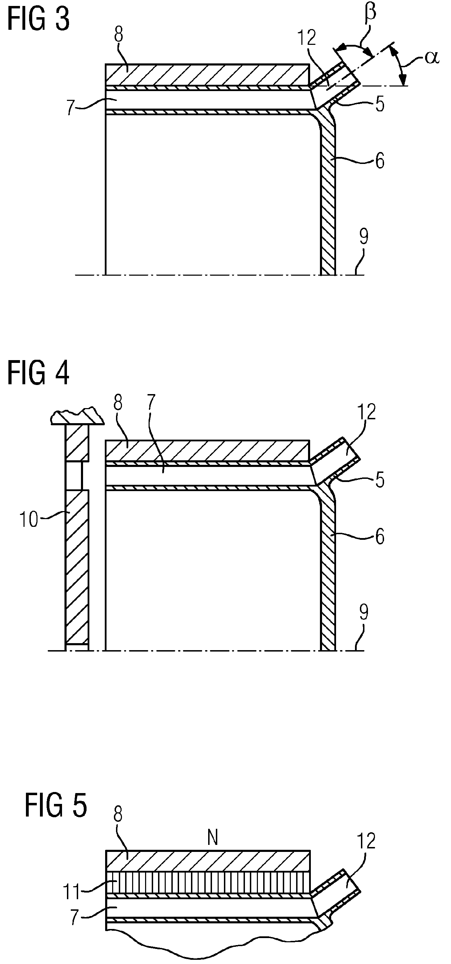

FIG 3 zeigt in einer Detaildarstellung den Läufer 4, der radial unterhalb seiner Permanentmagnete 8 die Ausnehmungen 7 aufweist, die als Kühlkanäle 7 fungieren. Auf der axial anderen Seite des Läufers 4 erhalten diese Kühlkanäle 7 je eine nach außen geführte Krümmung, die in einen Auslass 12 mündet.

Die Formgebung der Auskragung 16 wird im Wesentlichen durch zwei Winkel α, β vorgegeben. Durch Vorgabe dieser Winkel α, β wird die Geräuschentwicklung, die Ausblaserichtung des Auslasses 12, die Radiallüfterwirkung und die Sogwirkung der Trageinheit 5 und damit des Läufers 4 beeinflusst.

Ergänzend zu dem Läufer 4 aus FIG 3 ist bei Betrieb der dynamoelektrischen Maschine 1 mit einer Vorzugsdrehrichtung dem Läufer 4 in Strömungsrichtung axial ein stationäres Leitrad 10 gemäß FIG 4 vorgeschaltet, das die Strömungsverluste der in die Trageinheit 5 eintretenden Kühlluft reduzieren soll. Dies ist besonders bei einer Vorzugsdrehrichtung der dynamoelektrische Maschine 1 von Vorteil.

FIG 5 zeigt in einer weiteren Ausführungsform einen Permanentmagneten 8, der auf einer Zwischenlage, die vorzugsweise geblecht ausgeführt ist, angeordnet ist, um den Magnetfluss besser führen zu können. Es handelt sich dabei dann um eine Art Blechpaket 11, das auf der Trageinheit 5 positioniert, z.B. aufgeschrumpft ist. Diese Ausführung ist besonders bei den klassischen Magneten vorzusehen, bei denen, je nach Anordnung auf der Wandung der Trageinheit 5 Nord- oder Südpol zum Luftspalt 15 weisen.

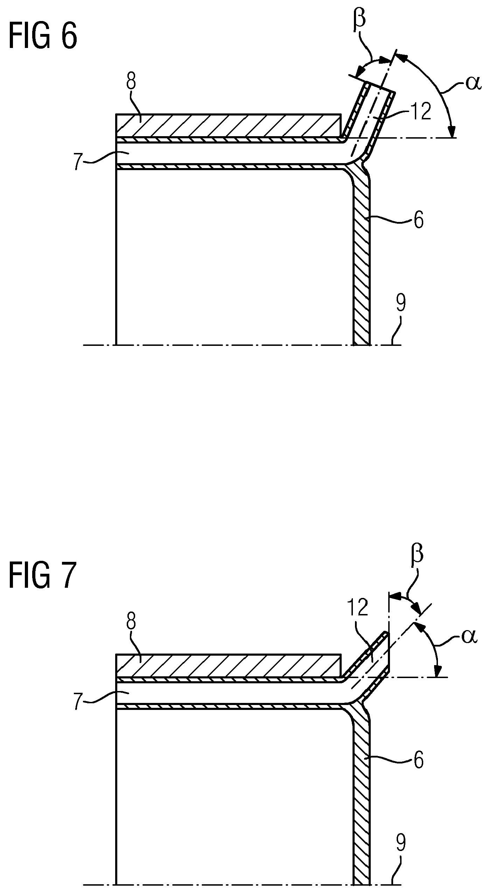

FIG 6 und 7 zeigen unterschiedliche Ausgestaltungen des Läufers 4 hinsichtlich der Ausbildung der Auskragung 16 bzw. des Auslasses 12.

Die Formgebung der Auskragung 16 wird auch hier im Wesentlichen durch zwei Winkel α, β vorgegeben. Durch Vorgabe dieser Winkel α, β wird die Geräuschentwicklung, die Ausblaserichtung des Auslasses 12, die Radiallüfterwirkung und die Sogwirkung der Trageinheit 5 und damit des Läufers 4 beeinflusst.

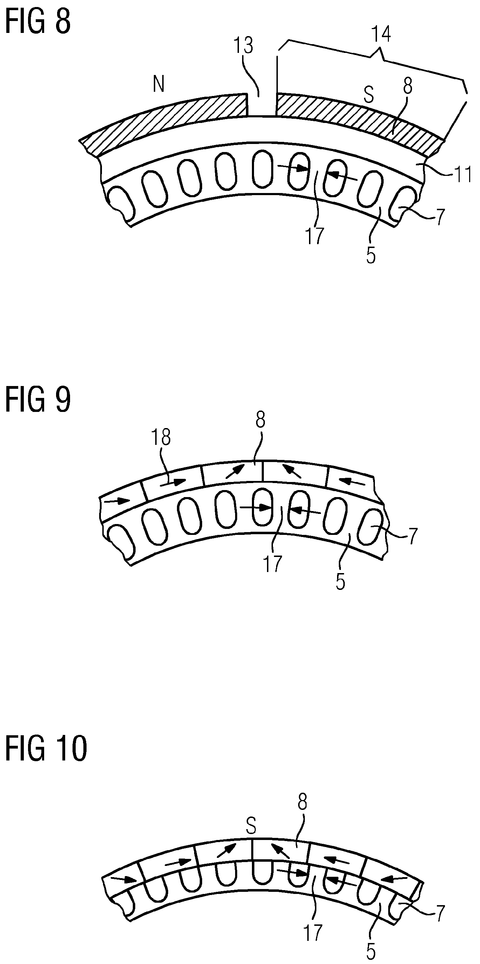

FIG 8 zeigt in einem partiellen Querschnitt des Läufers 4 zwei magnetische Pole 14 durch eine Pollücke 13 getrennt, wobei zum einen ein Nord-Pol (N) und beim benachbarten Pol ein Süd-Pol (S) zum Luftspalt 15 weisen. Die jeweils dazu korrespondierende Polarität weist zur Wandung der Trageinheit 5. Um eine Führung des magnetischen Flusses bei diesen Permanentmagneten 8 zu gewährleisten, ist zwischen der Wandung der Trageinheit 5 und den Permanentmagneten 8 ein magnetisch leitfähiges Material vorzusehen, sofern die Trageinheit 5 aus Material mit mangelnder magnetischer Leitfähigkeit ausgebildet ist. Es handelt sich dabei dann um eine Art Blechpaket 11, das auf der Trageinheit 5 positioniert, z.B. aufgeschrumpft ist. Auf diesem Blechpaket 11 sind dann die Permanentmagnete 8 fixiert. Pro magnetischem Pol 14 sind dabei in axialer und/oder radialer und/oder in Umfangsrichtung betrachtet wenigstens ein Permanentmagnet 8 vorgesehen.

FIG 9 und FIG 10 unterscheiden sich lediglich durch die Formgebung der Kühlkanäle 7. In FIG 9 sind diese in Umfangsrichtung betrachtet geschlossen. In FIG 10 sind diese in Richtung Permanentmagnet 8 bzw. Luftspalt 15 zumindest teilweise radial geöffnet.

FIG 9 und 10 weisen pro magnetischem Pol 14 in Umfangsrichtung betrachtet Teilmagnete mit unterschiedlicher Magnetisierungsrichtung 18 auf. Damit wird der Verlauf des magnetischen Flusses pro Pol 14 "nachgebildet".

Im Idealfall sind diese Permanentmagnete 8 lateral magnetisiert. Ein Blechpaket 11 zur Flussführung nach den Ausführungen nach FIG 9 und FIG 10 ist damit nicht mehr zwingend notwendig.

Die Permanentmagnete 8 sind grundsätzlich an der Oberfläche der Trageinheit 5, also der dem Luftspalt 15 zugewandten Wandung angeordnet. Sie werden dort durch Kleber und/oder Bandagen fixiert und gesichert.

Die Kühlkanäle 7 sind in ihrem axialen Verlauf bis zum Auslass 12 mit nahezu identischem Querschnitt ausgeführt. Um eine verbesserte Kühlwirkung zu erzielen sind die Kühlkanäle 7 in ihrem axialen Verlauf mit einer Querschnittserweiterung ausgestattet, was natürlich nur mit einer Verringerung der Stegbreiten 17 einhergehen kann. Ebenso ist eine Querschnittsveränderung über den axialen Verlauf vorstellbar, beispielsweise von rundlich nach eckig, wie es z.B. in FIG 2 dargestellt ist.

Des Weiteren ist die Anzahl der Kühlkanäle 7 direkt einer Breite des Pols 14 zugeordnet. Bei einer Pollücke 13 gemäß einer Ausführung nach FIG 8 kann dann dort die Stegbreite 17 vergrößert sein.

Eine derartige dynamoelektrische Maschine 1 mit einem erfindungsgemäßen Läufer 4 wird u.a. aufgrund der geringen Masse und damit auch der Trägheit der Trageinheit 5 und der Effizienz der Kühlung der dort angeordneten Permanentmagneten 8, vor allem bei Produktionsmaschinen, wie z.B. Werkzeugmaschinen, elektrischen Antrieben in Fahrzeugen, wie z.B. Elektroautos, Traktionsantrieben von Miningtrucks oder Schienenfahrzeugen und elektrisch angetriebenen Flugapparaten eingesetzt.

## Patentansprüche

1. Läufer (4) einer permanenterregten dynamoelektrischen rotatorischen Maschine (1) mit einer topfartigen, zumindest eine zylinderförmige Wandung aufweisende Trageinheit (5), wobei am Außenumfang der Wandung dieser Trageinheit (5) Permanentmagnete (8) angeordnet sind und in der Wandung im wesentlichen axial verlaufende Kühlkanäle (7) vorgesehen sind.

2. Läufer (4) nach Anspruch 1, **dadurch gekennzeichnet, dass** die Trageinheit (5) eine Tragstruktur (6) aufweist, die mit einer Welle drehfest verbindbar ist und die speichenförmig ausgeführt ist.

3. Läufer (4) nach Anspruch 1 oder 2, **dadurch** g e - **kennzeichnet**, dass sich die Tragstruktur (6) an einem axialen Ende der Trageinheit (5) befindet.

4. Läufer (4) nach einem der vorhergehenden Ansprüche, **da - durch gekennzeichnet**, dass die Kühlkanäle (7) in Umfangsrichtung betrachtet geschlossen und/oder radial nach außen offen ausgebildet sind.

5. Läufer (4) nach Anspruch 4, **dadurch gekennzeichnet, dass** die Kühlkanäle (7) an einem axialen Ende der Trageinheit (5) in eine Auskragung münden.

6. Läufer (4) nach einem der vorhergehenden Ansprüche, **da - durch gekennzeichnet,** dass die Permanentmagnete (8) gemäß einer Halbach-Anordnung angeordnet sind oder dass die Permanentmagnete (8) als lateral magnetisierte Permanentmagnete (8) ausgeführt sind.

7. Dynamoelektrische Maschine (1) mit einem Läufer (4) nach einem der vorhergehenden Ansprüche, wobei ein stationär angeordnetes Vorleitrad (10) dem Läufer (4) strömungstechnisch vorgeschaltet ist.

8. Werkzeugmaschine, elektrisch angetriebenes Fahrzeug oder elektrisch angetriebenes Flugzeug, mit zumindest einer dynamoelektrischen Maschine (1) nach Anspruch 7.
